# EUROPÄISCHE PATENTSCHRIFT

(11) **EP 1 564 529 B1**
(45) Veröffentlichungstag und Bekanntmachung des Hinweises auf die Patenterteilung: **30.01.2008**
(21) Anmeldenummer: 04026375.8
(22) Anmeldetag: 05.11.2004
(51) Int. Cl.: G01D 5/347

(54) **Winkelmesseinrichtung**
Angular position measuring arrangement
Dispositif de détection d'angle

(30) Priorität: 13.02.2004 DE 102004007445
(43) Veröffentlichungstag der Anmeldung: 17.08.2005
(73) Patentinhaber: Dr. Johannes Heidenhain GmbH, 83292 Traunreut (DE)
(72) Erfinder: Meyer, Hermann, 83458 Schneizlreuth (DE); Schmid, Alfred, 83371 Stein a.d. Traun (DE); Tauber, Johann, 83301 Traunreut (DE)

(56) Entgegenhaltungen:
- EP-A- 0 828 319
- EP-A- 1 167 916
- DE-A1- 19 913 262
- DE-U- 29 624 207
- US-A- 4 512 184

## Beschreibung

Die Erfindung betrifft eine Winkelmesseinrichtung gemäß dem Patentanspruch 1.

Winkelmesseinrichtungen, häufig auch Drehgeber genannt, dienen zur Messung von Drehbewegungen eines drehbar gelagerten Körpers, insbesondere einer Welle, über eine oder mehrere Umdrehungen. Die Drehbewegung wird dabei inkremental oder absolut erfasst. In Verbindung mit Zahnstangen und Zahnrädern oder mit Gewindespindeln lassen sich mit einer Winkelmesseinrichtung auch lineare Bewegungen messen.

Über Anschlusskabel werden der Winkelmesseinrichtung eine Betriebsspannung zugeführt und die Messsignale abgenommen und an eine Folgeelektronik weitergeleitet. Hierzu ist bei bekannten Winkelmesseinrichtungen an einer Kappe der Winkelmesseinrichtung eine Öffnung vorgesehen, durch die hindurch das Anschlusskabel der Winkelmesseinrichtung zugeführt und dort mit einer geeigneten elektrischen Anschlusseinheit kontaktiert werden kann.

Aus der EP 1 167 916 A1 der Anmelderin ist eine Winkelmesseinrichtung mit einer Vorrichtung zur Zugentlastung des Anschlusskabels bekannt. Dort wird die Zugentlastung bzw. eine Fixierung des Anschlusskabels durch das Schließen eines Deckels erreicht.

In der deutschen Offenlegungsschrift DE 199 13 262 A1 ist eine Winkelmesseinrichtung mit einer topfförmigen, hohlzylindrischen Kappe beschrieben. Das Anschlusskabel der Winkelmesseinrichtung wird dort vor der Herstellung einer Steckverbindung mit Hilfe eines Halters zugentlastend fixiert, wobei ein Fixierbereich des Anschlusskabels geklemmt wird.

Aus der DE 296 24 207 U1 ist eine Winkelmesseinrichtung bekannt, bei der das Zugentlastungsteil für das Anschlusskabel ein integraler Bestandteil des Gehäuses ist. Dabei ist das Anschlusskabel bereits vor dem Herstellen einer Steckverbindung zwischen dem Anschlusskabel und der Messelektronik der Winkelmesseinrichtung mechanisch gesichert.

Die bekannten Winkelmesseinrichtungen haben den Nachteil, dass sie vergleichsweise schwierig zu montieren sind. Insbesondere gilt dies, wenn eine Zugentlastungsvorrichtung erst nach der Herstellung der Steckverbindung zwischen Anschlusskabel und der Messelektronik der Winkelmesseinrichtung wirksam ist. Darüber hinaus sind die bekannten Winkelmesseinrichtungen, insbesondere jene welche mit weniger schwierigem Montageaufwand zusammenbaubar sind, mit Zugentlastungsvorrichtungen ausgestattet, die nur vergleichsweise aufwändig herstellbar sind.

Der Erfindung liegt die Aufgabe zugrunde, eine Winkelmesseinrichtung der eingangs genannten Art zu schaffen, die mit einfachen Mitteln eine zuverlässige und schnelle Montage ermöglicht, wobei die Winkelmesseinrichtung eine robuste Bauweise aufweist.

Diese Aufgabe wird erfindungsgemäß durch die Schaffung einer Winkelmesseinrichtung mit den Merkmalen des Patentanspruchs 1 gelöst.

Demnach wird zur Fixierung des Anschlusskabels bereits während der Montage durch ein Federelement eine Kraft erzeugt, die das Anschlusskabel an die Kappe drückt. Auf diese Weise wird das Anschlusskabel in einem Kontaktbereich der Kappe form- und/oder reibschlüssig an der Kappe befestigt. Damit ist das Anschlusskabel zum Beispiel zur weiteren Montage der Winkelmesseinrichtung sicher fixiert.

In einer bevorzugten Ausführungsvariante wird nach erfolgter Montage eines Deckels, das Anschlusskabel, das einen Fixierbereich, etwa eine Crimphülse, aufweist, nicht nur vom Federelement, sondern auch von dem Deckel an die Kappe gedrückt.

Mit Vorteil besteht das Federelement aus einem gebogenen Stahlblech, insbesondere Federstahlblech. Dadurch ist eine hohe Elastizität des Federelements gegeben. Die Kappen werden üblicherweise durch ein Gussverfahren hergestellt, so dass als Werkstoffe hierfür beispielsweise Aluminiumlegierungen oder Kunststoffe in Betracht kommen. Dies Materialien verformen sich aber bereits bei vergleichsweise geringen Spannungen bzw. Belastungen plastisch, so dass mit Vorteil das Material des Federelements von dem Werkstoff der Kappe verschieden ist.

Durch die hohe elastische Verformbarkeit des Federelements ist eine sichere Fixierung des Anschlusskabels während der Montage möglich, auch wenn der Außendurchmesser des Anschlusskabels beispielsweise im Bereich der Crimphülse starken Maßtoleranzen unterliegt. Die Andrückkraft ist, bedingt durch die Federeigenschaften, einerseits stets ausreichend groß und andererseits immer unter der maximal zulässigen Belastung etwa für die Crimphülse oder die Kappe. In der erfindungsgemäßen Winkelmesseinrichtung können also vergleichsweise kostengünstig hergestellte Anschlusskabel mit großen Maßtoleranzen in deren Fixierbereichen verwendet werden.

Weitere vorteilhafte Ausgestaltungen der Erfindung sind den abhängigen Ansprüchen zu entnehmen.

Weitere Merkmale und Vorteile der Erfindung werden bei der nachfolgenden Beschreibung eines Ausführungsbeispiels anhand der Figuren deutlich werden.

Es zeigen:
- Figur 1: eine perspektivische Ansicht einer Winkelmesseinrichtung,
- Figur 2a: eine Draufsicht auf die Kappe ohne den geöffneten Deckel, gemäß einem ersten Ausführungsbeispiel
- Figur 2b: eine Schnittdarstellung einer Kappe mit angefedertem Anschlusskabel und ohne den geöffneten Deckel, gemäß dem ersten Ausführungsbeispiel,
- Figur 3a: eine Seitenansicht eines Federelements, gemäß dem ersten Ausführungsbeispiel,
- Figur 3b: eine Draufsicht auf das Federelements, gemäß dem ersten Ausführungsbeispiel,
- Figur 3c: eine perspektivische Ansicht des Federelements, gemäß dem ersten Ausführungsbeispiel,
- Figur 4: eine perspektivische Teilschnittdarstellung eines Deckels, gemäß dem ersten Ausführungsbeispiel,
- Figur 5a: eine Seitenansicht eines Federelements, gemäß einem zweiten Ausführungsbeispiel,
- Figur 5b: eine Draufsicht auf das Federelement, gemäß dem zweiten Ausführungsbeispiel,
- Figur 5c: eine perspektivische Ansicht des Federelements, gemäß dem zweiten Ausführungsbeispiel,
- Figur 6a: eine Schnittdarstellung einer Kappe mit angefedertem Anschlusskabel und ohne den geöffneten Deckel, gemäß dem zweiten Ausführungsbeispiel,
- Figur 6b: eine Draufsicht auf die Kappe ohne den geöffneten Deckel, gemäß dem zweiten Ausführungsbeispiel,
- Figur 7: eine Draufsicht auf die Kappe ohne den geöffneten Deckel, gemäß dem dritten Ausführungsbeispiel.

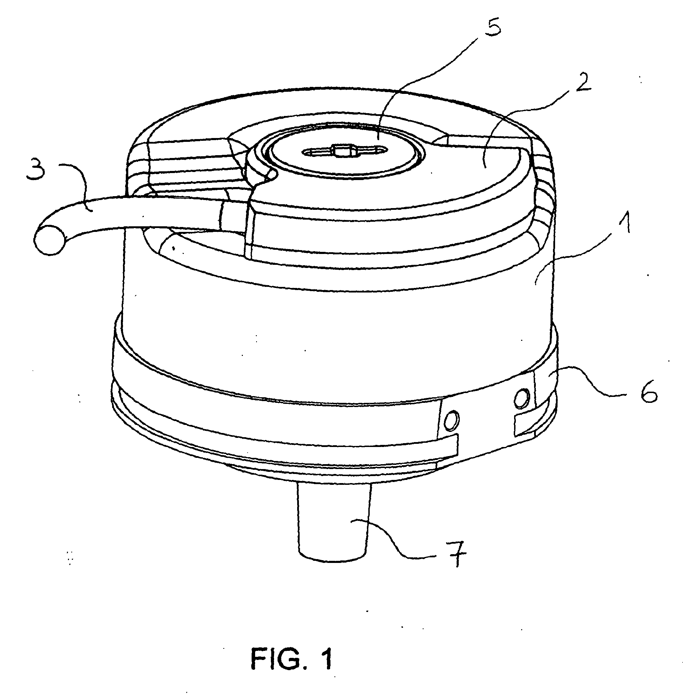

Die in der Figur 1 dargestellte Winkelmesseinrichtung weist eine Welle 7 zum Anschluss an einen zu messenden Körper auf. Die Verbindung zwischen der Welle 7 und dem zu messenden Körper wird beispielsweise mit einem durch die Welle 7 ragenden Verbindungsmittel in Form einer Befestigungsschraube realisiert.

Die Winkelmesseinrichtung selbst wird über einen Grundkörper 6 an einem weiteren Körper befestigt. Der zu messende Körper ist beispielsweise eine Motorwelle und der weitere Körper ein stationäres Motorgehäuse. Winkelmesseinrichtungen, die für diese Anwendungen konzipiert sind werden auch häufig als Drehgeber bezeichnet.

In bekannter Weise ist die Welle 7 im Grundkörper 6 drehbar gelagert, wobei an der Welle 7 eine im Inneren der Winkelmesseinrichtung angeordneten Codescheibe befestigt ist und/oder die Welle 7 über ein Getriebe eine oder mehrere Codescheiben antreibt. Die Codescheibe wird im gezeigten Beispiel lichtelektrisch von einer Abtasteinrichtung abgetastet. Entsprechende lichtempfindliche Detektoren befinden sich auf einer Leiterplatte, auf der unter anderem elektrische Bauelemente zur Signalformung - beispielsweise Verstärkung und Digitalisierung - der von den Detektoren gelieferten Abtastsignalen angeordnet sind. Auf der Leiterplatte befindet sich neben dieser Messelektronik weiterhin ein elektrischer Anschluss einer Steckverbindung, im vorgestellten Ausführungsbeispiel eine Buchse. Der Gegenanschluss dieser im Inneren der Winkelmesseinrichtung liegenden Steckverbindung, hier ein Stecker, ist an einem nach außen führenden Anschlusskabel 3 befestigt. Das Anschlusskabel 3 ist zu sicheren Signalübertragung geschirmt ausgeführt.

Zum Schutz der Winkelmesseinrichtung und deren Messelektronik ist eine topfförmige Kappe 1 vorgesehen, welche über den Umfang klemmend am Grundkörper 6 befestigt ist. Im dargestellten Beispiel ist diese Verbindung eine Pressverbindung.

Ferner weist die Winkelmesseinrichtung einen Deckel 2 auf, der durch eine Schraube 5 an der Kappe 1 befestigt ist.

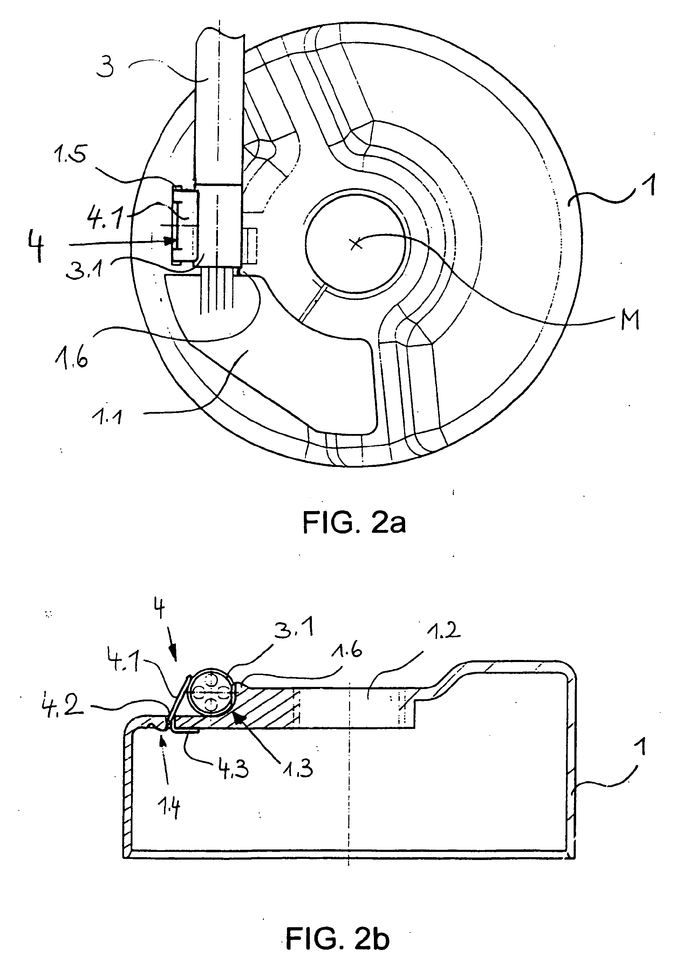

In den Figuren 2a und 2b ist die Kappe 1 der Winkelmesseinrichtung aus der Figur 1 separat dargestellt. Auf diese Figuren wird nachfolgend zusätzlich zur Figur 1 Bezug genommen.

In der Figur 2a ist die Kappe 1 ohne aufgesetztem Deckel 2 dargestellt. Das Anschlusskabel 3 weist an einem Ende einen Fixierbereich auf, der im gezeigten Ausführungsbeispiel als eine elektrisch leitende Crimphülse 3.1 ausgestaltet ist, welche mit dem Schirm des Anschlusskabels 3 in elektrischer Verbindung steht. Aus der Crimphülse 3.1 ragen die einzelnen Adern des Anschlusskabels 3 heraus, die in der Figur 2a durch Striche schematisch dargestellt sind. Am Ende der Adern befindet sich ein Stecker, der in der Figur 2a nicht gezeigt ist.

Die topfförmige Kappe 1 weist eine im Wesentliche hohlzylindrische Form auf, wobei eine Stirnfläche des Hohlzylinders völlig offen ist. Die entsprechend gegenüberliegende Stirnfläche, auch als Rückwand bezeichnet, weist eine außermittige Öffnung 1.1 auf. Diese Öffnung 1.1 ist vollständig außerhalb des Mittelpunktes M der Rückwand angeordnet, d. h. der Rand der Öffnung 1.1 umschließt nicht den Mittelpunkt M. Zum einfachen Anschluss und Auswechseln des Anschlusskabels 3 werden die Adern und der Stecker durch diese Öffnung 1.1 der Kappe 1 geführt, so dass der Stecker in eine Buchse, welche an einer Leiterplatte innerhalb der Winkelmesseinrichtung angeordnet ist, gesteckt werden kann.

An dessen Fixierbereich bzw. an dessen Crimphülse 3.1 wird das Anschlusskabel 3 bereits bei geöffnetem Deckel 2 mit Hilfe eines Federelements 4 zur Zugentlastung an der Kappe 1 festgelegt, wobei ein Anschlag 1.6 an der Kappe 1 eine einfache Platzierung der Crimphülse 3.1 an einem vorgesehenen Kontaktbereich 1.3 der Kappe 1 ermöglicht. Zur Fixierung des Anschlusskabels 3 bei geöffnetem Deckel 2 ist demnach das Federelement 4 an der Kappe 1 befestigt.

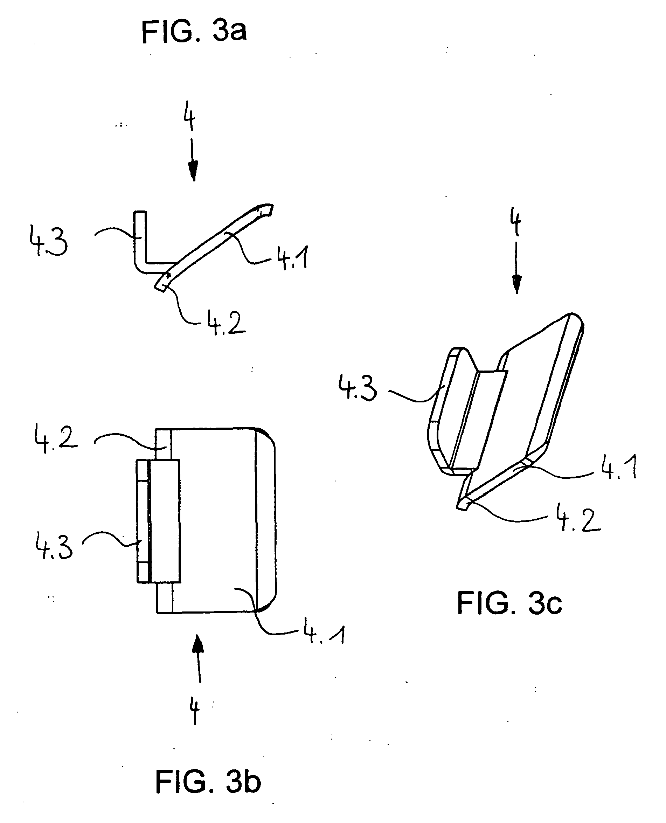

In den Figuren 3a bis 3c ist das Federelement 4 gemäß einem ersten Ausführungsbeispiel dargestellt. Das Federelement 4 ist als ein einstückiges Blechteil ausgeführt, welches durch ein Biegverfahren hergestellt wird. Nach dem Biegen des hier 0,5 mm starken Federstahlbleches entsteht ein Federelement 4, welches eine Zunge 4.1, zwei Haltekrallen 4.2 und einen Stützwinkel 4.3 umfasst.

In der Figur 2b ist die Befestigung des Federelements 4 an der Kappe 1 im Detail zu sehen. Im Zuge der Montage des Federelements 4 an die Kappe 1 wird zunächst der Stützwinkel 4.3 des Federelements 4 durch einen Schlitz 1.5 der Kappe 1 geführt, so dass die beiden Haltekrallen 4.2 des Federelements 4 vorgespannt die Innenwand des Schlitzes 1.5 berühren. Danach wird in einem Klemmbereich 1.4 der Kappe 1 eine plastische Verformung durch Eintreiben eines Meißels vorgenommen, so dass Material der Kappe 1 teilweise in den Schlitz 1.5 fließt. Nach diesem Prozess ist das Federelement 4 spielfrei an der Kappe 1 festgelegt.

Wenn die Crimphülse 3.1 bzw. das Anschlusskabel 3 an der Kappe 1 festgelegt werden soll, wird die Crimphülse 3.1 entgegen dem Federdruck an den Kontaktbereich 1.3 gedrückt, so dass das Anschlusskabel 3 vom Federelement 4 gehalten wird, wenn die Crimphülse 3.1 den Kontaktbereich1.3 berührt.

Durch das Federelement 4 ist somit eine Kraft erzeugbar, die bezüglich des Anschlusskabels 3 eine radiale Richtungskomponente aufweist, wobei durch diese Kraft das Anschlusskabel 3 an die Kappe 1 gedrückt wird. Auf diese Weise wird das Anschlusskabel 3 in einem Kontaktbereich 1.3 der Kappe 1 form- und reibschlüssig an der Kappe 1 befestigt. Eine am Anschlusskabel 3 außerhalb der Winkelmesseinrichtung angreifende Zugkraft wird dadurch nicht auf die Steckverbindung übertragen.

Die form- und reibschlüssige Befestigung des Anschlusskabels 3 an der Kappe 1 bei geöffnetem Deckel 2 dient in erster Line zur einfachen Montage der Winkelmesseinrichtung, insbesondere zur einfachen Herstellung der Steckverbindung zwischen dem Anschlusskabel 3 und der Leiterplatte im Inneren der Winkelmesseinrichtung. Nachdem die Steckverbindung hergestellt ist, wird der Deckel 2 an der Kappe 1 befestigt. Zu diesem Zweck wird die Schraube 5 durch ein entsprechendes Loch im Deckel 2 gesteckt und in eine zentrale Bohrung 1.2 der Kappe 1, welche ein Innengewinde aufweist, gedreht.

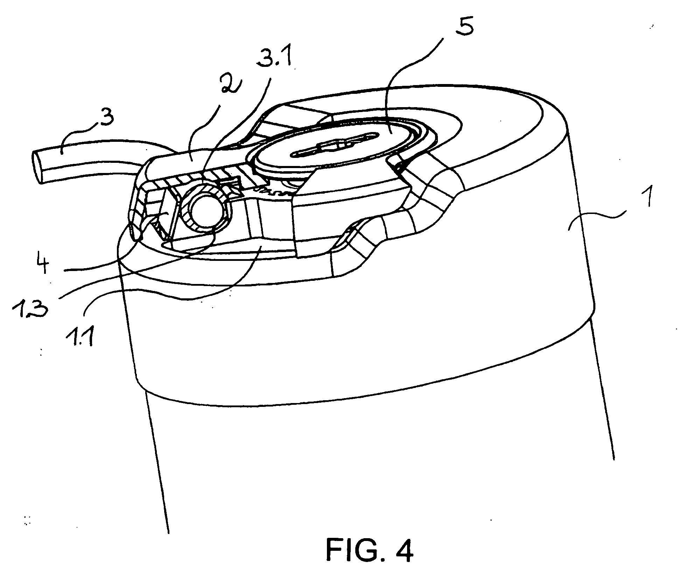

In der Figur 4 ist eine perspektivische Teilschnittdarstellung des Deckels 2, wie er an der Kappe 1 montiert ist, gezeigt. Der Deckel 2 dient unter anderem dazu die Öffnung 1.1 in der Kappe 1 zu verschließen. Ferner umschließt der Deckel 2 auch die Crimphülse 3.1, den Kontaktbereich 1.3 an der Kappe 1 und das Federelement 4. Die vom Deckel 2 umschlossen Bauelemente sind durch den Deckel 2 allseitig zumindest staubdicht gegenüber der Umgebung abgedeckt und gegen elektromagnetische Felder abgeschirmt. Um eine dichte Verbindung zwischen dem Deckel 2 und der Rückwand der Kappe 1 zu schaffen, erstrecken sich die seitlichen Ränder des Deckels 2 bis auf die Oberfläche der Rückwand bzw. bis zur Seitenwand der Kappe 1.

Durch die spezielle Ausgestaltung des Deckels 2 wird auf die Crimphülse 3.1 auch vom geschlossenen Deckel 2 eine Kraft eingeleitet, welche die Crimphülse 3.1 gegen den Kontaktbereich 1.3 drückt und somit eine erhöhte Kontaktsicherheit der Schirmanbindung gewährleistet. Mit anderen Worten wird nach dem Schließen des Deckels 2 durch diesen eine Kraft erzeugt, welche das Anschlusskabel 3 zur weiteren Zugentlastung an die Kappe 1 drückt. Durch diese Maßnahme werden die zulässigen Zugkräfte für die Zugentlastung erhöht.

Die Crimphülse 3.1 ist, wie bereits erwähnt elektrisch leitend, und ist zur sicheren und einfachen Befestigung am Kontaktbereich 1.3 der Kappe 1 durch das Federelement 4 und durch den Deckel 2 geklemmt. Der Kontaktbereich 1.3 ist an die Form der Hülse 3.1 angepasst. Die Crimphülse 3.1 stellt somit eine elektrische Verbindung zwischen dem Schirm des Anschlusskabels 3 und der Kappe 1 samt Deckel 2 her. Die Kappe 1 ist dadurch über das Anschlusskabel 3 auf einfache Weise mit dem Bezugspotential einer Folgeelektronik (Zähler, Steuerung) verbindbar. Als Material für die Kappe 1, wie auch für den Deckel 2, wurde im gezeigten Ausführungsbeispiel eine Aluminium-Druckguss-Legierung gewählt. Alternativ dazu kann aber auch beispielsweise ein elektrisch leitender Kunststoff oder ein elektrisch leitend beschichteter Kunststoff- insbesondere ein Spritzgussteil verwendet werden.

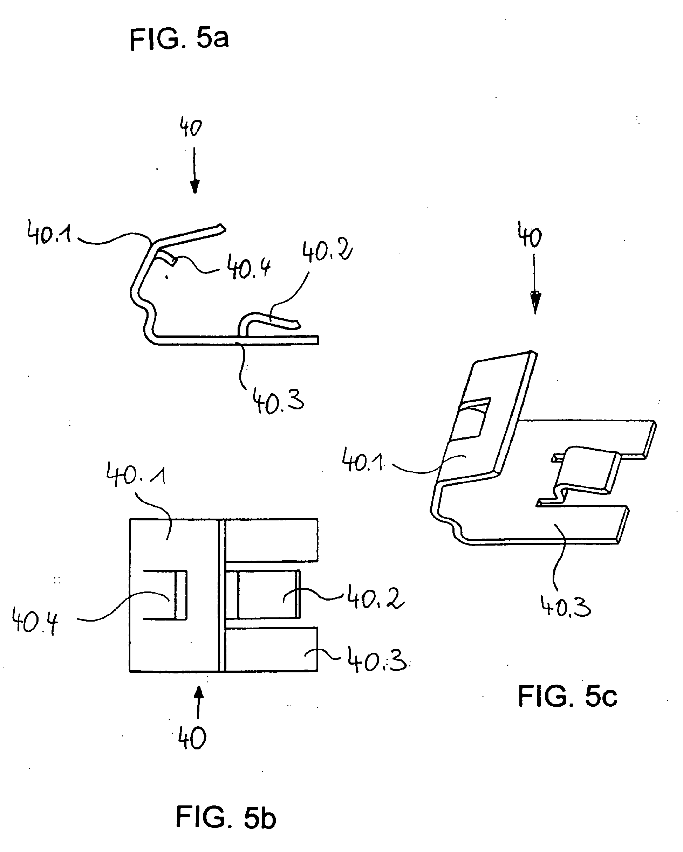

In den Figur 5a bis 5c ist das Federelement 40 gemäß einem zweiten Ausführungsbeispiel dargestellt. Das Federelement 40 ist auch in diesem Beispiel als ein einstückiges Blechteil aus Federstahlblech ausgeführt, welches durch ein Biegverfahren hergestellt wird. Das Federelement 40 umfasst eine Zunge, 40.1, eine Haltekralle 40.2, einen Stützwinkel 40.3 und einen Stützsteg 40.4.

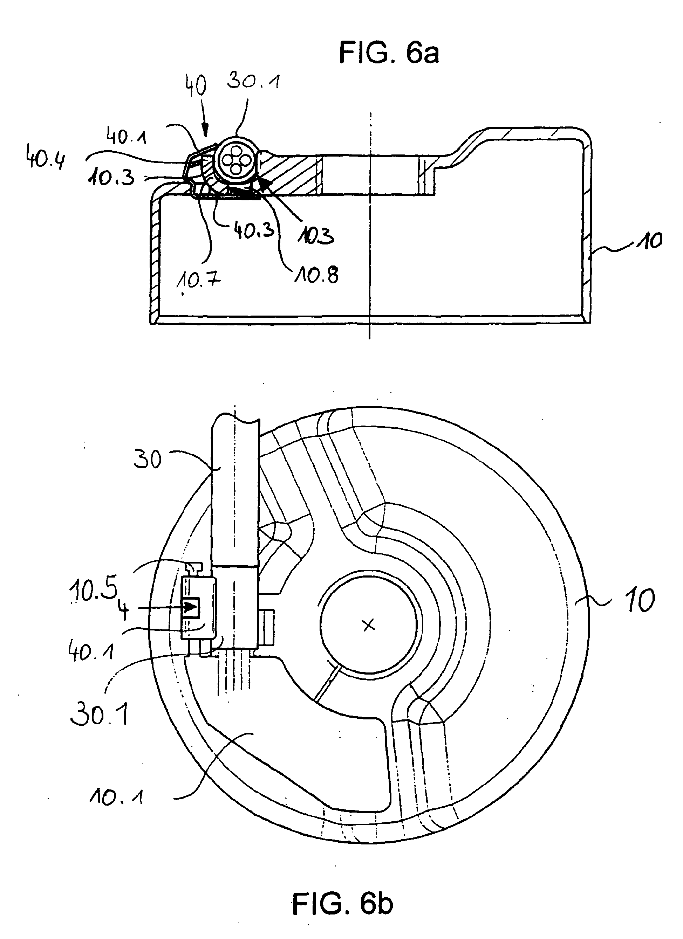

Gemäß der Figur 6a wird in der Rückwand der Kappe 10 eine weitere außermittige Öffnung dadurch gebildet, dass in der Rückwand ein Steg 10.7 aufgebördelt worden ist. Durch diese spezielle Ausgestaltung der Kappe 10 entsteht eine U-förmige Form zur Aufnahme der Crimphülse 30.1. Dadurch wird der Kontaktbereich 10.3 im Vergleich zu dem ersten Ausführungsbeispiel vergrößert. Zur Montage des Federelements 40 wird auch im zweiten Ausführungsbeispiel der Stützwinkel 40.3 des Federelements 40 durch den Schlitz 10.5 gesteckt. Allerdings stützt sich hier die Haltekralle 40.2 an einer Innenwand eines weiteren Schlitzes 10.8 ab. Diese Ausführungsbeispiel zeigt auch, dass es nicht zwingend erforderlich ist, dass die Öffnung 10.1 und der Schlitz 10.5 in der Rückwand der Kappe 10 jeweils als separate Öffnungen ausgebildet sein müssen. In diesem Ausführungsbeispiel ist nämlich eine Verbindung zwischen der Öffnung 10.1 und dem Schlitz 10.5 gegeben. Der Schlitz 10.5 und die Öffnung 10.1 können also auch zusammengefasst als ein Durchstich gesehen werden.

Durch die spezielle Gestaltung des Federelements 40 wird eine vorgespannte Anordnung des Federelements 40 an der Kappe 10 erreicht, insbesondere dadurch, dass die Federkraft der Haltekralle 40.2 der Federkraft des Stützsteges 40.4 entgegenwirkt.

In der Figur 6b ist ein Draufsicht auf die Kappe 10 samt Anschlusskabel 30 gezeigt in einer Montagephase, in welcher der Deckel 2 noch nicht geschlossen bzw. aufgesetzt ist. In der Figur 6b, wie auch in der Figur 6a, ist zu erkennen, dass die Crimphülse 30.1 des Anschlusskabels 30 durch die Zunge 40.1 des Federelements 40 an die Kappe gedrückt wird. Wenn also die Crimphülse 30.1 entsprechen positioniert ist, wird auch hier zur Fixierung des Anschlusskabels 30 durch das Federelement 40 eine Kraft erzeugt, die bezüglich des Anschlusskabels 30 eine radiale Richtungskomponente aufweist. Durch diese Kraft wird das Anschlusskabel 30 an die Kappe 10 gedrückt, so dass das Anschlusskabel 30 im Kontaktbereich 10.3 der Kappe 10 form- und reibschlüssig an der Kappe 10 befestigt ist.

Nach der Herstellung der Steckverbindung zwischen dem Stecker des Anschlusskabels 30 und der Buchse auf der Leiterplatte der Winkelmesseinrichtung kann auch hier der Deckel 2 aufgesetzt werden, der die gleichen Funktionen wie im ersten Ausführungsbeispiel aufweist.

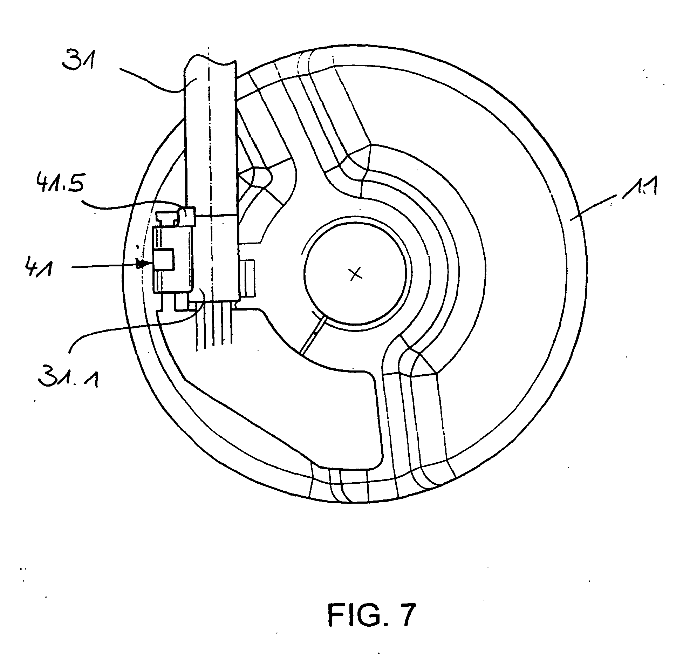

In der Figur 7 ist eine Draufsicht auf die Kappe 11, gemäß einem dritten Ausführungsbeispiel gezeigt, ohne den (geöffnetem) Deckel 2. Auch in diesem Beispiel drückt das Federelement 41 die Crimphülse 31.1 des Anschlusskabels 31 an die Kappe 11. Allerdings weist hier das Federelement 41 eine Nase 41.5 auf, die in axialer Richtung bezüglich des Anschlusskabels 31 über die Crimphülse 31.1 hinaus ragt. Diese Nase 41.5 weist femer einen Vorsprung auf, der in radialer Richtung bezüglich des Anschlusskabels 31 zur Mitte des Anschlusskabels 31 hin gerichtet ist. Durch die Federkraft des Federelements 41 wird der radial gerichtete Vorsprung in die weiche Außenisolierung des Anschlusskabels 31 gedrückt. Dabei berührt der Vorsprung den Rand der Crimphülse 31.1. Auf diese Weise wird durch die Nase 41.5 eine formschlüssige Zugentlastung bzw. Sicherung des Anschlusskabels 31 gegenüber Axialverschiebungen erreicht. Insgesamt ist das Anschlusskabel 31 auch in diesem Beispiel form- und reibschlüssig gesichert, nachdem ja durch das Federelement 41 auch eine Andrückkraft an die Kappe 11 erzeugt wird, woraus letztlich eine Reibkraft resultiert.

## Patentansprüche

1. Winkelmesseinrichtung mit
- einer Kappe (1; 10; 11),
- einem Anschlusskabel (3; 30; 31), und
- einem Federelement (4; 40; 41), welches eine Zunge (4.1, 40.1) umfasst und an der Kappe (1; 10; 11) angeordnet ist,
wobei zur Fixierung des Anschlusskabels (3; 30; 31) durch das Federelement (4; 40; 41) eine Kraft erzeugbar ist, die bezüglich des Anschlusskabels (3; 30; 31) eine radiale Richtungskomponente aufweist, wobei durch diese Kraft das Anschlusskabel (3; 30; 31) von der Zunge (4.1, 40.1) an die Kappe (1; 10; 11) gedrückt wird, so dass das Anschlusskabel (3; 30; 31) in einem Kontaktbereich (1.3; 10.3) der Kappe (1; 10; 11) form- und/oder reibschlüssig an der Kappe (1; 10; 11) befestigt ist.

2. Winkelmesseinrichtung gemäß dem Anspruch 1, wobei die Kappe (1; 10; 11) eine Öffnung (1.1; 10.1) durch welche das Anschlusskabel (3; 30; 31) geführt ist aufweist, und nach dem Schließen eines Deckels (2) der Deckel (2) die Öffnung (1.1; 10.1) und den Kontaktbereich (1.3; 10.3) gegenüber der Umgebung abdeckt.

3. Winkelmesseinrichtung gemäß dem Anspruch 2, wobei nach dem Schließen des Deckels (2) durch den Deckel (2) eine Kraft erzeugbar ist, welche das Anschlusskabel (3; 30; 31) zur weiteren Zugentlastung an die Kappe (1; 10; 11) drückt.

4. Winkelmesseinrichtung gemäß dem Anspruch 3, wobei das Anschlusskabel (3; 30; 31) einen Fixierbereich (3.1) aufweist, und die Kräfte, welche vom Federelement (4; 40; 41) und vom Deckel (2) erzeugt werden zum Herstellen der form- und/oder reibschlüssiger Verbindung des Fixierbereichs (3.1) mit dem Kontaktbereich (1.3; 10.3) der Kappe (1; 10; 11) dienen.

5. Winkelmesseinrichtung gemäß einem der vorhergehenden Ansprüche, wobei das Federelement (4; 40; 41) aus einem gebogenen Stahlblech, insbesondere Federstahlblech, besteht.

6. Winkelmesseinrichtung gemäß einem der vorhergehenden Ansprüche, wobei das Federelement (4; 40; 41) einstückig ausgestaltet ist.

7. Winkelmesseinrichtung gemäß einem der vorhergehenden Ansprüche, wobei das Federelement (4; 40; 41) Haltekrallen (4.2; 40.2) aufweist.

8. Winkelmesseinrichtung gemäß einem der vorhergehenden Ansprüche, wobei das Federelement (4; 40; 41) an der Kappe (1; 10; 11) durch eine Klemmverbindung befestigt ist.

9. Winkelmesseinrichtung gemäß dem Anspruch 8, wobei die Kappe (1; 10; 11) zur Sicherung der Befestigung des Federelements (4; 40; 41) im Bereich (1.4) der Klemmverbindung plastisch verformt ist.

## Claims

1. Angular position measuring device with
• a cap (1; 10; 11)
• a connection cable (3; 30; 31) and
• a spring element (4; 40; 41) which comprises a tongue (4.1, 40.1) and is arranged on the cap (1; 10; 11),
wherein to secure the connection cable (3; 30; 31), a force can be generated by the spring element (4; 40; 41), which has a radial direction component with respect to the connection cable (3; 30; 31), wherein through this force the connection cable (3; 30; 31) is pressed by the tongue (4.1, 40.1) against the cap (1; 10; 11), so that the connection cable (3; 30; 31) is fastened by positive and/or frictional engagement on the cap (1; 10; 11) in a contact region (1.3; 10.3) of the cap (1; 10; 11).

2. Angular position measuring device according to claim 1, wherein the cap (1; 10; 11) has an opening (1.1; 10.1), through which the connection cable (3; 30; 31) is guided, and after closure of a cover (2), the cover (2) screens the opening (1.1; 10.1) and the contact region (1.3; 10.3) from the surrounding area.

3. Angular position measuring device according to claim 2, wherein after closure of the cover (2), a force can be generated by the cover (2) that presses the connection cable (3; 30;31) against the cap (1; 10; 11) for further strain relief.

4. Angular position measuring device according to claim 3, wherein the connection cable (3; 30; 31) has a fastening region (3.1), and the forces that are generated by the spring element (4; 40; 41) and the cover (2) serve to create a connection of the fastening region (3.1) to the contact region (1.3; 10.3) of the cap (1: 10; 11) by positive and/or frictional engagement.

5. Angular position measuring device according to one of the preceding claims, wherein the spring element (4; 40; 41) is made from a bent steel plate, in particular spring steel plate.

6. Angular measuring device according to one of the preceding claims, wherein the spring element (4; 40; 41) is configured in one piece.

7. Angular measuring device according to one of the preceding claims, wherein the spring element (4; 40; 41) has holding claws (4.2; 40.2).

8. Angular measuring device according to one of the preceding claims, wherein the spring element (4; 40; 41) is fastened to the cap (1; 10; 11) by a clamping joint.

9. Angular measuring device according to claim 8, wherein the cap (1; 10; 11) is plastically deformed in the region (1.4) of the clamping joint to secure the fastening of the spring element (4; 40; 41).

## Revendications

1. Dispositif de mesure d'angle qui comprend :
- un capot (1 ; 10 ; 11),
- un câble de raccordement (3 ; 30 ; 31),
- un élément élastique (4 ; 40 ; 41) qui présente une languette (4.1, 40.1) et qui est monté sur le capot (1 ; 10 ; 11),
étant précisé que pour fixer le câble de raccordement (3 ; 30 ; 31) par l'élément élastique (4 ; 40 ; 41), il peut être produit une force qui présente par rapport au câble de raccordement (3 ; 30 ; 31) une composante en direction radiale et qui par la languette (4.1, 40.1) applique en pression sur le capot (1 ; 10 ; 11) le câble de raccordement de sorte que celui-ci est fixé avec verrouillage par friction et/ou par combinaison de formes dans une zone de contact (1.3 ; 10.3) du capot (1 ; 10 ; 11).

2. Dispositif de mesure d'angle selon la revendication 1, **caractérisé en ce que** le capot (1 ; 10 ; 11) présente une ouverture (1.1 ; 10.1) à travers laquelle passe la câble de raccordement (3 ; 30 ; 31) et qu'un couvercle (2), en se fermant, pour recouvrir l'ouverture (1 .1 ; 10.1) et la zone de contact (1.3 ; 10.3) en les séparant de l'environnement.

3. Dispositif de mesure d'angle selon la revendication 2, **caractérisé en ce que** par le couvercle (2), après fermeture de celui-ci, il peut être produit une force qui applique le câble de raccordement (3 ; 30 ; 31) sur le capot (1 ; 10 ; 11) pour décharger ce câble davantage des tractions.

4. Dispositif de mesure d'angle selon la revendication 3, **caractérisé en ce que** le câble de raccordement (3 ; 30 ; 31) présente une zone de fixation (3.1) et que les forces produites par l'élément élastique (4 ; 40 ; 41) et par le couvercle (2) vont servir à établir la liaison, avec verrouillage par combinaison de formes et/ou par friction, de la zone de fixation (3.1) avec la zone de contact (1.3 ; 10.3) du capot (1 ; 10 ; 11).

5. Dispositif de mesure d'angle selon une des revendications précédentes, **caractérisé en ce que** l'élément élastique (4 ; 40 ; 41) est en tôle d'acier pliée, notamment en tôle d'acier pour ressort.

6. Dispositif de mesure d'angle selon une des revendications précédentes, **caractérisé en ce que** l'élément élastique (4 ; 40 ; 41) est monobloc.

7. Dispositif de mesure d'angle selon une des revendications précédentes, **caractérisé en ce que** l'élément élastique (4 ; 40 ; 41) présente des griffes de maintien (4.2 ; 40.2).

8. Dispositif de mesure d'angle selon une des revendications précédentes, **caractérisé en ce que** l'élément élastique (4 ; 40 ; 41) est fixé au capot (1 ; 10 ; 11) par une liaison par serrage.

9. Dispositif de mesure d'angle selon la revendication 8, **caractérisé en ce que** le capot (1 ; 10 ; 11), afin de sécuriser la liaison de l'élément élastique (4 ; 40 ; 41) est déformé plastiquement dans la zone (1.4) de la liaison par serrage.
